(19) Europäisches Patentamt
European Patent Office
Office européen des brevets

(11) Veröffentlichungsnummer: **0 644 212 A1**

(12) **EUROPÄISCHE PATENTANMELDUNG**

(21) Anmeldenummer: **94113563.4**

(51) Int. Cl.$^6$: **C08F 236/18**

(22) Anmeldetag: **31.08.94**

(30) Priorität: **20.09.93 DE 4331907**

(43) Veröffentlichungstag der Anmeldung:
**22.03.95 Patentblatt 95/12**

(84) Benannte Vertragsstaaten:
**DE FR GB IT**

(71) Anmelder: **BAYER AG**
**D-51368 Leverkusen (DE)**

(72) Erfinder: **Schmidt, Gudrun, Dr.**
**Mockethalerstrasse 24**
**D-01257 Dresden (DE)**
Erfinder: **Bierlich, Magdalina, Dr.**
**Wiekestrasse 3**
**D-01273 Dresden (DE)**
Erfinder: **Schmidt, Hermann, Dr.**
**Mockethalerstrasse 24**
**D-01257 Dresden (DE)**
Erfinder: **Obrecht, Werner, Dr.**
**Holderbergerstrasse 108**
**D-47447 Moers (DE)**
Erfinder: **Happ, Michael, Dr.**
**Goethestrasse 57c**
**D-41539 Dormagen (DE)**

(54) **Chloroprencopolymerisate.**

(57) Chloroprencopolymerisate, die 1 bis 40 Gew.-% eines ungesättigten Carbonsäureimids, eines ungesättigten Carbonsäureanhydrids und/oder einer ungesättigten Carbonsäure einpolymerisiert enthalten, weisen praktisch keinen Gelgehalt auf und eignen sich zur Herstellung von Vulkanisaten mit verbesserter thermischer Beständigkeit.

EP 0 644 212 A1

Die Erfindung betrifft Chloroprencopolymerisate, die einen bestimmten Anteil an ungesättigten Carbonsäureimiden, Carbonsäureanhydriden und/oder Carbonsäuren enthalten sowie deren Verwendung zur Herstellung von Vulkanisaten.

Polychloropren ist seit langem als vielseitig verwendbarer Kautschuk mit einem ausgewogenen Eigenschaftsprofil bekannt. Er wird durch radikalische Polymerisation, meist in Emulsion, hergestellt.

Wegen der ungünstigen Lage von Chloropren im Alfrey-Price-Diagramm (e = -0,02; Q = 7,26) (s. Brandrup, Immergut (Ed.), Polymer Handbook 2nd edition (1975) 391) lassen sich nur wenige Vinylmonomere gut mit Chloropren copolymerisieren. In den meisten Fällen beobachtet man eine starke Tendenz von Chloropren zur Homopolymerisation (s. P.R. Johnson, Rubber Chem. Technol. 49 (1976) 650-702). Praktische Anwendung gefunden haben Copolymere mit 2,3-Dichlorbutadien für langsam kristallisierende CR-Typen, mit (Meth)acrylsäure im Latex- und Klebstoffbereich, mit di- und multifunktionellen Verbindungen, wie Ethylenglycoldimethacrylat, für vorvernetzte CR-Typen und mit Schwefel (schwefelmodifizierte CR-Typen) für dynamisch beanspruchte Gummiartikel.

Hohe Einbauraten des Comonomeren in die Polymerkette findet man lediglich bei der Copolymerisation von Chloropren mit 2,3-Dichlorbutadien, mit Vinylidencyanid oder mit 2-Chloracrylnitril (vgl. P.R. Johnson, Rubber Chem. Technol. 49 (1976) 650-702 und DE-A 1.111.397).

Gegenstand der Erfindung sind Chloroprencopolymerisate, die 1 bis 40 Gew.-% eines ungesättigten Carbonsäureimids, eines ungesättigten Carbonsäureanhydrids und/oder einer ungesättigten Carbonsäure der allgemeinen Formeln:

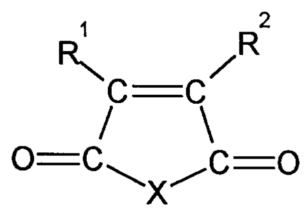

(I)

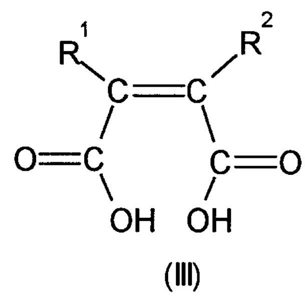

(III)

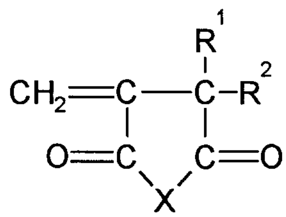

(II)

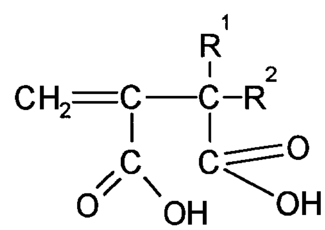

(IV) ,

worin

X für 0, NH oder $NR^3$ steht,

$R^1$ und $R^2$ gleich oder verschieden sind und H oder $C_1$-$C_4$-Alkyl bedeuten und

$R^3$ für $C_6$-$C_{12}$-Aryl, $C_1$-$C_4$-Alkyl oder $C_5$-$C_6$-Cycloalkyl steht,

sowie gegebenenfalls 0,1 bis 2 Gew.-% Schwefel einpolymerisiert enthalten, und die keinen oder nur einen sehr geringen Gelgehalt aufweisen.

Bevorzugte Mengen an einpolymerisierten Comonomeren der obengenannten Formeln sind 2 bis 20 Gew.-%.

Der Gelgehalt der Polymerisate liegt bei höchstens 2 %, bezogen auf Feststoff (gemessen in Toluol).

Als Comonomere kommen insbesondere in Betracht:

N-Phenylmaleinimid, Maleinimid, N-Cyclohexylmaleinimid, N-Benzylmaleinimid, Maleinsäureanhydrid, Citraconsäureanhydrid, Itaconsäureanhydrid, Maleinsäure, Citraconsäure sowie Itaconsäure.

Neben den genannten Comonomeren können vernetzend wirkende Monomere, d.h. solche mit 2 oder mehr polymerisierbaren Kohlenstoffdoppelbindungen, wie Ethylenglykoldimethacrylat, Divinylbenzol und/oder Triallylisocyanurat, in den üblichen Mengen (2 bis 15 Gew.-%, bevorzugt 3 bis 10 Gew.-%)

eingebaut sein, um das Copolymerisat zu vernetzen und damit unlöslich zu machen (Gelgehalt ≧ 70 %, gemessen in Toluol).

Die Herstellung der erfindungsgemäßen Copolymerisate ist grundsätzlich mit den für die Polymerisation von Chloropren bekannten Methoden möglich, d.h. durch Polymerisation der Monomeren in Emulsion, Lösung, Suspension oder in Masse mit Hilfe von radikalischen Initiatoren. Die Emulsionspolymerisation verwendet in der Regel Wasser als kontinuierliche Phase, Emulgatoren um das Polychloropren fein zu verteilen und Wasser oder Monomer lösliche radikalische Initiatoren. Bevorzugt ist hier die Polymerisation in Lösung. Als Lösungsmittel kommen aromatische Kohlenwasserstoffe, z.B. Toluol, chlorierte aliphatische Kohlenwasserstoffe, wie 1,2-Dichlorethan, Ether, wie Dioxan, Tetrahydrofuran, Ester, wie Ethylacetat, und Ketone, wie Methylethylketon, in Frage. Im allgemeinen arbeitet man in 5 bis 35 gew.-%iger Lösung und polymerisiert zu möglichst hohen Monomerumsätzen (bevorzugt 60 bis 80 % Monomerumsätzen).

Für die Polymerisation sind Initiatoren erforderlich (Menge: 1 x $10^{-2}$ mol/l bis 4 x $10^{-2}$ mol/l). Geeignet sind Azoinitiatoren, wie Azo-bis-isobutyronitril (AIBN), und Peroxide oder Hydroperdoxide, wie Benzoylperoxid, aber auch Redoxsysteme, wie Kaliumpersulfat / Natriumdithionit oder Menthanhydroperoxid / $FeSO_4$ / Ethylendiamintetraessigsäure / Ronglit®C [Hydroxymethansulfinsäure, Na-Salz]. Die Polymerisation kann bei Temperaturen von ca. 5 bis 65 °C durchgeführt werden. Zur Einstellung der Viskosität des Polymeren können Kettenübertragungsmittel, wie Mercaptane (z.B. n-Dodecylmercaptan) oder Xanthogendisulfide (z.B. Diisopropylxanthogendisulfid) eingesetzt werden. Die Copolymerisate können aus den primär erhaltenen Lösungen isoliert werden durch Fällen mit einem Nichtlösungsmittel (z.B. Methanol oder Isopropanol), Abfiltrieren und Waschen oder durch Entfernen des Lösungsmittels durch Strippen mit Wasserdampf oder Destillieren. Alle diese Methoden sind dem Fachmann bekannt und Stand der Technik.

Die erfindungsgemäßen Copolymerisate sind vulkanisierbare Kautschuke, die die wesentlichen Eigenschaften des Polychloroprens, d.h. Lösungsmittelbeständigkeit und Witterungsbeständigkeit besitzen. Sie kristallisieren aber langsamer und besitzen eine verbesserte thermische Beständigkeit. Ihre Glastemperatur ist etwas höher als die des reinen Polychloroprens. Die Copolymerisate können in reiner Form als Kautschuke eingesetzt werden (wobei sie gegebenenfalls vulkanisiert werden). Bevorzugt werden sie aber als Zusätze zu Polychloropren verwendet, um dessen Eigenschaften zu modifizieren. Für die Vulkanisation benutzt man die für Polychloropren bekannten Methoden.

## Beispiele

### Allgemeine Polymerisationsvorschrift

In einem gerührten Polymerisationsgefäß wurden unter Stickstoffspülung 60 ml Lösungsmittel (Dioxan) auf 60 °C aufgeheizt, die Monomeren zugegeben und nach Erreichen der Polymerisationstemperatur der Initiator in 10 ml Lösungsmittel gelöst zugegeben. Die Polymerisation wurde durch Zugabe von Hydroxychinon und Abkühlen mit Trockeneis abgebrochen. Die Copolymeren wurden in Methanol (bei Copolymeren mit Anhydriden: Isopropanol) ausgefällt und bei 35 °C im Vakuum getrocknet.

Folgende Parameter waren bei allen Versuchen gleich:

| | |
|---|---|
| Initiatorkonzentration: | 0,2 g (2x$10^{-2}$ mol/l) AIBN |
| Gesamtmonomerkonzentration: | 4 mol/l |
| Polymerisationstemperatur: | 60 °C |

Ausgewählte Polymereigenschaften der Chloropren-Copolymere zeigen die Tabellen 1 bis 3.

### Charakterisierung der Chloropren-Copolymere mittels DSC

Die Glastemperaturmessungen erfolgten am Gerät DSC-30 der Firma METTLER. Für die Glastemperaturmessungen wurde folgendes Temperaturprogramm gewählt:

1. Aufheizen von 20 °C auf 120 °C mit einer konstanten Heizrate von 10 K/min
2. Isothermes Tempern bei 120 °C 30 Sekunden lang
3. Abkühlen von 120 °C auf -60 °C mit einer konstanten Kühlrate von 10 K/min
4. Isothermes Tempern bei -60 °C 1 Minute lang
5. Aufheizen von -60 °C auf 200 °C mit einer konstanten Heizrate von 10 K/min
6. Abkühlen von 200 °C auf 20 °C mit einer Kühlrate von 20 K/min.

Die Schritte 1 bis 3 dienten nur dem Vorbereiten der Probe auf die eigentliche Glastemperaturmessung.

Die Schritte 4 und 5 entsprechen der eigentlichen Glastemperaturmessung. Mit Hilfe des Schrittes 6 wird die gemessene Probe mit einer größeren Kühlrate wieder auf Raumtemperatur abgekühlt. Die Messungen erfolgten unter Stickstoffatmosphäre. Als Kühlgas wurde Stickstoff (reinst) verwendet.

**Tabelle 1:**

**Ausgewählte Polymereigenschaften der Chloropren/Imid-Copolymere**

| Copolymere | CP im Monomergemisch (mol-%) | eingebaute Comonomere (Gew.-%) | Tg (°C) | ΔHm aus DSC (J/g) | K aus DSC (%) | $T_{max}$ (°C) | $T_{me}$ (°C) |
|---|---|---|---|---|---|---|---|
| CR-Homopolymer (Vergleich) | 100 | - | -33,2 | 17,8 | 18,7 | 41,4 | 77,6 |
| CP/MI | 90 | 5,1 | -25,2 | 19,5 | 20,5 | 75,8 | 190,2 |
| | 70 | 17,3 | - 3,8 | 7,0 | 7,4 | 112,1 | 134,3 |
| | 50 | 35,4 | 34,6 | | | | |
| CP/CMI | 80 | 19,9 | -17,6 | 10,2 | 10,7 | 102,4 | 189,0 |
| | 70 | 30,7 | -11,9 | 3,1 | 3,3 | 148,2 | 153,4 |
| | 60 | 40,7 | 2,8 | | | | |
| CP/BMI | 90 | 11,1 | -34,3 | 16,2 | 17,1 | 96,2 | 152,5 |
| | 80 | 22,9 | 15,9 | 3,9 | 4,1 | 123,7 | 145,7 |
| | 70 | 32,5 | 11,7 | 1,6 | 1,7 | 125,5 | 143,9 |
| CP/NPI | 90 | 16,1 | -20,1 | 13,1 | 13,8 | 122,4 | 168,0 |
| | 70 | 28,5 | 6,8 | 3,8 | 3,5 | 131,2 | 158,0 |
| | 30 | 36,4 | 39,0 | 2,5 | 2,6 | 138,2 | 154,1 |

**Tabelle 2:**

**Ausgewählte Polymereigenschaften der Chloropren/Anhydrid-Copolymere**

| Copolymere | CP im Monomergemisch (mol-%) | eingebaute Comonomere (Gew.-%) | Tg (°C) | ΔHm aus DSC (J/g) | K aus DSC (%) | $T_{max}$ (°C) | $T_{me}$ (°C) |
|---|---|---|---|---|---|---|---|
| CR-Homopolymer (Vergleich) | 100 | - | -33,2 | 17,8 | 18,7 | 41,4 | 77,6 |
| CP/MSA | 95<br>80<br>60 | 6,2<br>18,6<br>28,9 | -32,5<br>-12,0<br>16,5 | 3,6<br>1,8 | 3,8<br>1,9 | 89,5<br>129,7 | 147,2<br>143,7 |
| CP/CSA | 90<br>70<br>50 | 10,4<br>14,2<br>32,8 | -22,6<br>- 2,1<br>21,5 | 20,1<br>2,2 | 21,1<br>2,3 | 102,6<br>44,1 | 137,4<br>55,5 |
| CP/ISA | 90<br>80<br>70 | 8,7<br>27,3<br>33,6 | -30,5<br>21,3<br>41,3 | 6,4<br>3,2<br>1,7 | 6,7<br>3,4<br>1,8 | 45,3<br>120,4<br>135,5 | 181,5<br>170,5<br>142,2 |

**Tabelle 3:**

**Ausgewählte Polymereigenschaften der Chloropren/Säure-Copolymere**

| Copolymere | CP im Monomergemisch (mol-%) | eingebaute Comonomere (Gew.-%) | Tg (°C) | ΔHm aus DSC (J/g) | K aus DSC (%) | $T_{max}$ (°C) | $T_{me}$ (°C) |
|---|---|---|---|---|---|---|---|
| CR-Homopolymer (Vergleich) | 100 | - | -33,2 | 17,8 | 18,7 | 41,4 | 77,6 |
| CP/MS | 90<br>70<br>60 | 2,8<br>9,7<br>15,4 | -35,4<br>-23,4<br>-19,4 | 10,0 | 10,5 | 105,2 | 141,8 |
| CP/CS | 90<br>70<br>50 | 6,7<br>13,9<br>27,3 | -26,7<br>-15,4<br>23,2 | 4,0 | 4,2 | 83,2 | 128,2 |
| CP/IS | 90<br>70<br>30 | 0,6<br>3,2<br>15,3 | -25,1<br>-13,0<br>50,8 | 9,2 | 9,7 | 91,3 | 145,3 |

Bemerkungen zu den Tabellen 1 bis 3:
- Bei höheren Gehalten an eingebauten Comonomeren sind die Kautschukeigenschaften nicht mehr nachweisbar.
- Der Einbau der Comonomere erhöht zunehmend die thermische Beschändigkeit und verringert die Kristallinität.

Symbolverzeichnis

BMI - N-Benzylmaleinimid
CMI - N-Cyclohexylmaleinimid
CP - Chloropren
CSA - Citraconsäureanhydrid
DSC - Differential Scanning Calorimetry
$\Delta H_m$ - Schmelzenthalpie

| | |
|---|---|
| IS | - Itaconsäure |
| K | - Kristallinität (K = $\Delta H_m/\Delta H_{krist.}$x100% $\Delta_{krist}$ (Polychloropren) = 95 x $10^3$ J/kg) |
| MI | - Maleimid |
| MS | - Maleinsäure |
| MSA | - Maleinsäureanhydrid |
| NPI | - N-Phenylmaleinimid |
| $T_{max}$ | - Temperatur im Maximum der Schmelzkurve (DSC) |
| $T_{me}$ | - Temperatur am Schmelzende (DSC) |
| Tg | - Glastemperatur (DSC) |

Die Kristallinität der Polymeren erfolgte durch Messung der Schmelzwärme mittels DSC. Daneben wurden auch die Temperaturen im Maximum der Schmelzkurve und am Schmelzende gemessen.

Die Polymeren wurden zur Bestimmung der Kristallinität 18 d bei -5 °C gelagert. Aus der Fläche des Schmelzpeaks wurde die Kristallinität nach folgender Gleichung berechnet:

$$\text{Kristallinität} = \frac{\Delta H_m}{\Delta H_{krist.}} * 100\ \%$$

$\Delta H_{krist.}$ (Polychloropren) = 95x$10^3$ J/kg (Merkulova, Klebanski, Bartashev; Vysokomol. Soedin., Ser. B, 16 - (1974) 806)

**Patentansprüche**

**1.** Chloroprencopolymerisate, die 1 bis 40 Gew.-% eines ungesättigten Carbonsäureimids, eines ungesättigten Carbonsäureanhydrids und/oder einer ungesättigten Carbonsäure der allgemeinen Formeln:

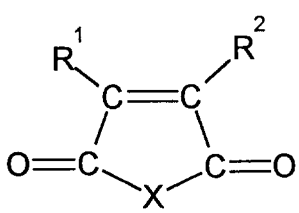

(I)

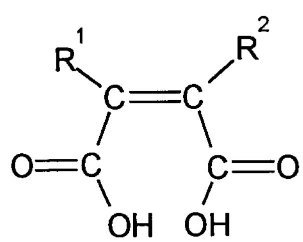

(III)

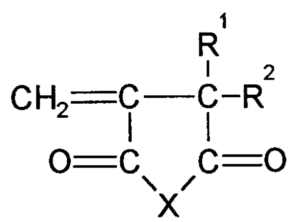

(II)

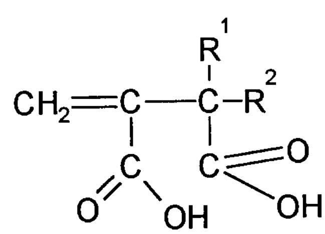

(IV) ,

worin

| | |
|---|---|
| X | für 0, NH oder $NR^3$ steht, |
| $R^1$ und $R^2$ | gleich oder verschieden sind und H oder $C_1$-$C_4$-Alkyl bedeuten und |
| $R^3$ | für $C_6$-$C_{12}$-Aryl, $C_1$-$C_4$-Alkyl oder $C_5$-$C_6$-Cycloalkyl steht, |

sowie gegebenenfalls 0,1 bis 2 Gew.-% Schwefel einpolymerisiert enthalten, und die keinen oder nur einen sehr geringen Gelgehalt aufweisen.

**2.** Chloroprencopolymerisate gemäß Anspruch 1, die durch Einpolymerisieren eines vernetzten Monomeren gelhaltig und unlöslich sind.

Europäisches Patentamt

# EUROPÄISCHER RECHERCHENBERICHT

Nummer der Anmeldung
EP 94 11 3563

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US-A-2 384 239 (G.L.DOROUGH ET AL.) 4. September 1945<br>* Anspruch 1 * | 1 | C08F236/18 |
| X | GB-A-1 238 934 (BORG-WARNER CORPOATION) 14. Juli 1971<br>* Anspruch 2; Beispiele III-B * | 1 | |
| X | DE-A-25 36 970 (BAYER AG)<br>* Seite 3, Zeile 23 - Zeile 24 * | 1 | |
| X | EP-A-0 457 642 (RHONE-POULENC)<br>* Seite 2, Zeile 55 - Zeile 56 * | 1 | |
| A | DE-A-17 95 187 (DENKI KAGAKU KOGYO K.K.) 16. März 1972<br>* Ansprüche * | 2 | |
| | | | RECHERCHIERTE SACHGEBIETE (Int.Cl.6) |
| | | | C08F |

Der vorliegende Recherchenbericht wurde für alle Patentansprüche erstellt

| Recherchenort | Abschlußdatum der Recherche | Prüfer |
|---|---|---|
| DEN HAAG | 27. Dezember 1994 | Van Humbeeck, F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument